# EUROPEAN PATENT APPLICATION

(11) **EP 1 172 132 A2**
(43) Date of publication of application: **16.01.2002**
(21) Application number: 01114584.4
(22) Date of filing: 18.06.2001
(51) Int. Cl.: A63F 13/10

(54) **Entertainment system, recording medium**

(30) Priority: 19.06.2000 JP 2000183038
(71) Applicant: Sony Computer Entertainment Inc., Tokyo 107-0052 (JP)
(72) Inventor: Futatsugi, Yukio, 7-chome, Minato-ku, Tokyo 107-0052 (JP); Yoshida, Kentaro, 7-chome, Minato-ku, Tokyo 107-0052 (JP); Suto, Junichi, 7-chome, Minato-ku, Tokyo 107-0052 (JP)
(74) Representative: Müller . Hoffmann & Partner Patentanwälte

(57) **Abstract**

A storage unit (53) stores a symbol data group consisting of symbols that express meaning by appearance, and management data indicating which symbols are selectable by the player, and a control unit (51) displays the player-selectable symbols in a manner enabling the symbols to be selected. Communication is then accomplished by displaying one or a plurality of symbols corresponding to operator data received by an input unit (70). It is thus possible to provide a new picture-character-based communication means in a role playing game played on an entertainment system.

## Description

This application claims a priority based on Japanese Patent Application No. 2000-183038 filed on June 19, 2000, the entire contents of which are incorporated herein by reference for all purposes.

### TECHNICAL FIELD

The present invention relates to a game that is played on an entertainment system, and relates more particularly to technology enabling communication between a character managed by a player and some other characters.

### BACKGROUND ART

In a common type of role playing game that is played on an entertainment system, the scenario advances as the character managed by the player carries on a simulated conversation with another character, The primary method for accomplishing this is to display a list of selectable messages on the screen and have the player manipulate a controller or other input device to select the message to be spoken by the player's character.

### DISCLOSURE OF THE INVENTION

When messages are simply selected from among a displayed list of available messages, it is difficult to get away from the feeling from the player's point of view that the game simply advances according to a number of prepared scenarios, and it is difficult for the player to imbue the character with the player's own intentions as a result of the game advancing due to the player thinking of messages representing his own lines. In addition, while messages would normally change according to the age, language used, and language knowledge of the player, the conventional method is necessarily limited to uniform messages and thus lacks freshness. As a result, development of a conversational method that is not conventionally available and offers a high degree of freedom is therefore desirable.

An object of the present invention is to provide technology enabling the player to create his own messages to converse with another character in a game that is played on an entertainment system.

In addition, a further object of the present invention is to provide technology enabling a player to enjoy a process of gradually learning a language in a game that is played on an entertainment system.

A yet further object of the present invention is to provide a game that can be enjoyed by a wide range of people regardless of age or the language used.

To achieve the above objects, the present invention provides an entertainment system comprising at least an input means for receiving operating data from a player, an output means for outputting image data for presenting information necessary to a game, storage means, and control means, the entertainment system advancing the game by the control means running a process based on a game program and game data stored in the storage means, wherein: the game data includes a symbol data group consisting of symbols expressing meaning by appearance, and management data indicative of which symbols can be selected by the player; the control means outputs symbols indicated by the management data as being selectable from the output means so that the symbols can be selected by the player, and outputs one or a plurality of symbols detected by the input means as being selected from the output means. The game program is a program for playing a game in which the game progresses according to communication between a player character manipulated by the player and a character other than the player character, each generated in virtual space; and the types of symbols selectable by the player character increases and decreases according to game progress.

### BRIEF DESCRIPTION OF THE DRAWINGS

Fig. 1 is a block diagram showing an example of the functional configuration of an entertainment system.
Figs. 2A to 2H show examples of picture characters, and examples of messages that can be created with combinations of picture characters.
Figs. 3A to 3C are conceptual illustrations for describing one scene of a game.
Figs. 4A and 4B show examples of messages created by combining picture characters.
Fig. 5 is a conceptual diagram showing the structure of response data recorded in a dictionary.
Fig. 6 is a conceptual diagram describing scene transitions.
Fig. 7 describes a process for increasing the number of picture characters that can be used.
Fig. 8 shows a hardware configuration of an entertainment system.
Fig. 9 shows how an entertainment system is used,

### BEST MODE FOR CARRYING OUT THE INVENTION

An embodiment of the present invention is described herein with reference to the accompanying figures.

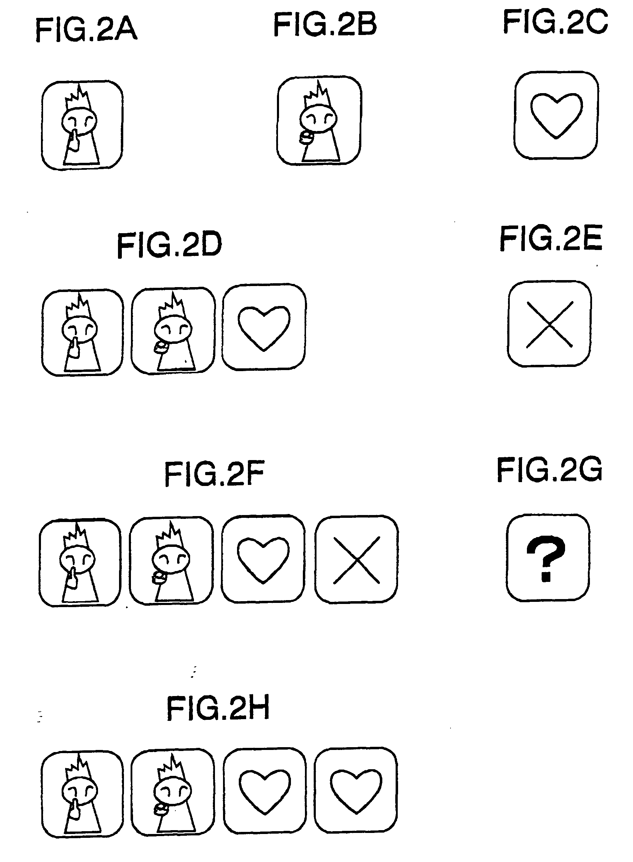

In this embodiment the character that can be managed by the player (the "player character") can communicate, that is, conduct a simulated conversation, with a character appearing in the game (a "game character"). The information exchanged in this conversation is a "message" as shown in Fig. 2D of appropriately combined picture characters, which are expressed as graphic images and symbols as shown in Fig. 2A to 2C, for example.

In other words, the player can in this embodiment of the invention create a message consisting of a combination of picture characters expressing the content the player wishes to convey to the game character. The picture characters that the player can use are selectably displayed in a list.

The game character also conveys to the player messages that are a combination of picture characters. The player can collect information required to advance the game and increase the types of picture characters that can be used by evaluating the content of this message.

In addition, the game character interprets messages input by the player, and performs various pre-defined actions, such as replying, according to the interpreted content. Scenes thus change and the game scenario progresses as a result of continued communication, including conversation, between the player character and the game character.

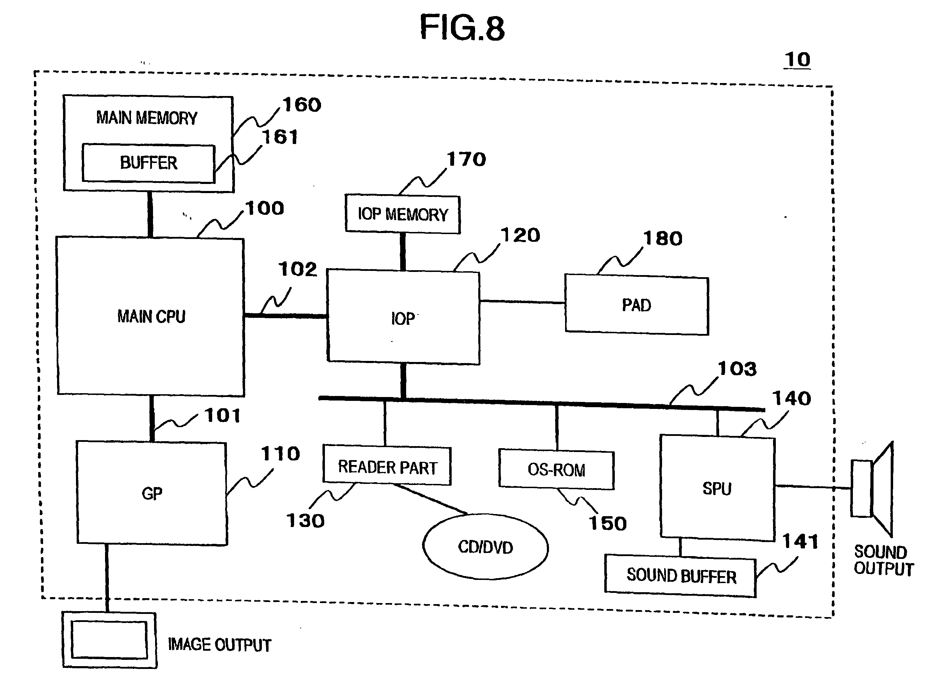

The hardware configuration of an entertainment system 10 according to the present embodiment of the invention is described first with reference to Fig. 8.

As shown in the figure, entertainment system 10 has a main CPU 100, graphics processor (GP) 110, I/O processor (IOP) 120, CD/DVD reader part 130, sound playback processor (SPU) 140, sound buffer 141, OS-ROM 150, main memory 160, and IOP memory 170.

Main CPU 100 and GP 110 are connected by a dedicated bus 101. In addition, main CPU 100 and IOP 120 are connected by a bus 102. Furthermore, IOP 120, CD/DVD reader part 130, SPU 140, and OS-ROM 150 are connected by bus 103.

Main memory 160 is connected to main CPU 100, and IOP memory 170 is connected to IOP 120. In addition, controller (PAD) 180 is connected to IOP 120.

Main CPU 100 runs specific processes by executing a program stored in OS-ROM 150 or a program transferred from CD or DVD-ROM, for example, to main memory 160.

GP 110 is a graphics processor for handling the rendering function, for example, of this entertainment system, and runs an image processing according to instructions from the main CPU 100.

IOP 120 is a subprocessor for input/output control, and controls data input and output between main CPU 100, peripheral devices such as CD/DVD reader part 130, and SPU 140, for example.

CD/DVD reader part 130 reads data from a CD-ROM or DVD-ROM loaded into a CD/DVD drive, and transfers the read data to buffer area 161 provided in main memory 160.

SPU 140 reproduces compressed waveform data stored in sound buffer 141 at a specified sampling frequency based on voice commands from main CPU 100, for example.

OS-ROM 150 is nonvolatile memory for storing the program run by main CPU 100 and IOP 120 at startup.

Main memory 160 is the primary storage device for main CPU 100, and is where commands run by main CPU 100 and data used by main CPU 100 are stored. A buffer area 161 is provided in main memory 160 for temporarily storing data read from CD-ROM, DVD-ROM, or other recording medium.

IOP memory 170 is the main storage device for IOP 120, and is where commands run by IOP 120 and data used by main CPU 100 are stored.

Controller 180 is an interface for receiving instructions from the player.

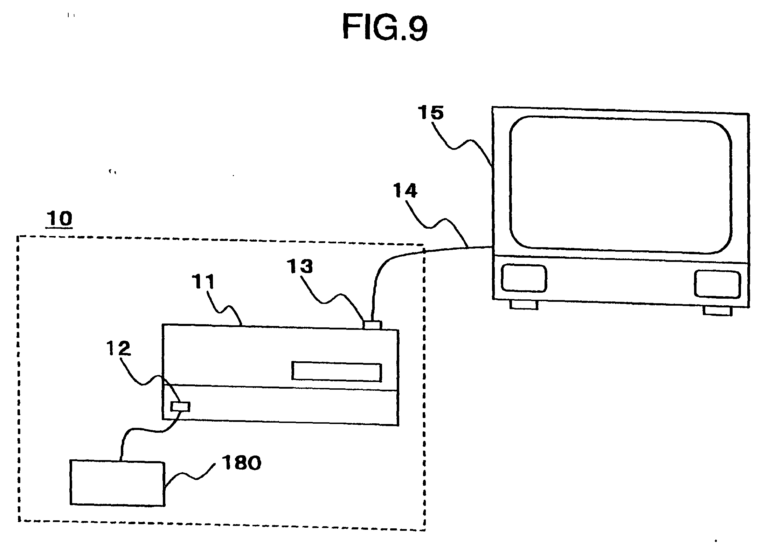

Fig. 9 describes how entertainment system 10 is used. In this figure controller 180 is connected to connector 12 of entertainment system unit 11. An AV output cable 14 is connected to AV output terminal 13 of entertainment system unit 11. An AV output device 15 such as a television is connected to the other end of this cable 14. A player of this entertainment system uses controller 180 to control operation. The entertainment system 10 receives instructions from the player by way of controller 180, and outputs video data and audio data corresponding to the instructions to AV output device 15. The AV output device 15 then outputs the audio and video.

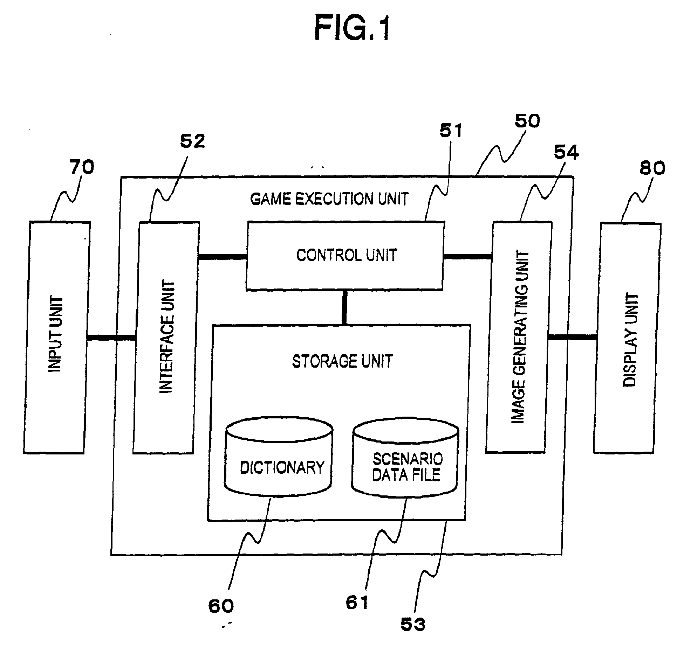

Fig. 1 is a block diagram showing an example of the functional configuration achieved with entertainment system 10 in this present embodiment.

In this figure input unit 70 for receiving various types of instructions as a result of player operations can be achieved by controller 180, for example, equipped with plural operating buttons. Operating data received by input unit 70 is sent to game execution unit 50.

The game execution unit 50 has a control unit 51 achieved by entertainment system 10 for controlling other parts according to predefined rules and thus determining the progress of the game, an interface unit 52 for performing conversion process of operating data from the input unit 70, particularly picture character messages from the player, a storage unit 53, and image generating unit 54.

The control unit 51 and interface unit 52 are achieved by the main CPU 100 running a program stored in main memory 160, for example.

Storage unit 53 is achieved by an optical disc or other recording medium and reader part 130, and main memory 160, for example. A dictionary 60 for interpreting messages written as combinations of picture characters, and a scenario data file 61 recording scenarios for advancing the game, data for picture character generation, scenario progress, and other necessary information, are stored in storage unit 53. The structure of dictionary 60 is further described below.

Image generating unit 54 is achieved with GP 110 for example, and runs a process according to commands from control unit 51 for generating and outputting to display unit 80 images to be displayed as a game scene according to scenario progress. Images to be displayed as a game scene include the movements of the player character and game character, surrounding elements, map information, picture character messages indicating the words spoken by the game character, picture characters selectable by the play, and the message comprising the picture characters selected by the player. The data for generating these images is stored in scenario data file 61 with correlation to the scenario.

The display unit 80 can be achieved with a television 15, for example, and processes image data generated by display unit 80 for display on screen.

Picture character messages used for conversation between the player character and game character in this embodiment are described next.

As noted above, messages used for conversation between the player character and game character are composed using a combination of plural picture characters (including using only one picture character). These picture characters are drawings, symbols, or other graphics symbolizing the meaning preassigned to the picture character.

Fig. 2 shows examples of picture characters, and examples of messages created with a combination of picture characters. In this figure, Fig. 2A is a picture character showing a picture of a person pointing at himself. The meaning of this picture character is left to the interpretation of the player, but is expected, for example, to be taken as meaning oneself. Fig. 2B is a picture character showing a picture of a person pointing at another person. This is expected, for example, to be taken as meaning another person such as you. Fig. 2C is a picture character showing a picture of a heart. This is expected to be taken as meaning emotion, for example. Alternatively, it is expected to be taken as meaning love, or feeling, or the heart.

Fig. 2D shows an example of a message combining these. The meaning of the message is also left to interpretation by the play. If the example shown in this figure is a message from the game character, the combination of "self," "you," and "heart" is expected to be taken as meaning, for example, "I like you." Alternatively, this could be expected to be taken as meaning "I give my heart to you," depending upon the situation. Conversely, when the player wants to express a meaning such as above, messages such as shown in the figure can be created.

Fig. 2E is a picture character of an "X". This picture character can be used to give a negative nuance to a message. When used in combination with other picture characters as shown in Fig. 2F, for example, the message can be taken as a negative sentence. The case shown in this figure can be interpreted as "I do not like you," for example. Interpretation is, of course, up to the player in this case and in the following examples.

Fig. 2G is a picture character of a question mark "?". This picture character can be used to express wonderment or doubt. When used in combination with other picture characters, this picture character can be used to create a question, for example.

Picture character messages in this embodiment can also be used for expressions such as shown in Fig. 2H. The message in this case is "me" "you" "heart" "heart" with the "heart" character doubled. This emphasizes the "heart" and can be used to mean "I like you very much."

The picture characters can also include items that appear during the game, for example. In this way the player character can include items discovered during the game in messages. This process can be achieved by linking flags in the list of usable picture characters to the scenario, and is further described below.

It is thus possible by means of the present invention to express various meanings using picture character combinations. It is therefore possible for the player to create flexible messages with a high degree of freedom when the player wants to convey his own intention to the game character. In addition, a new form of enjoyment can be had when the player interprets messages from the game character by guessing the most appropriate message content from among a number of possible interpretations.

A process for advancing game play in the present embodiment using picture character messages is described next. Game progress is handled by control unit 51 according to the scenarios recorded in the scenario data file 61. Various scenes (events) are readied in scenario data file 61 as possible scenarios, and scenes change according to the content of player actions.

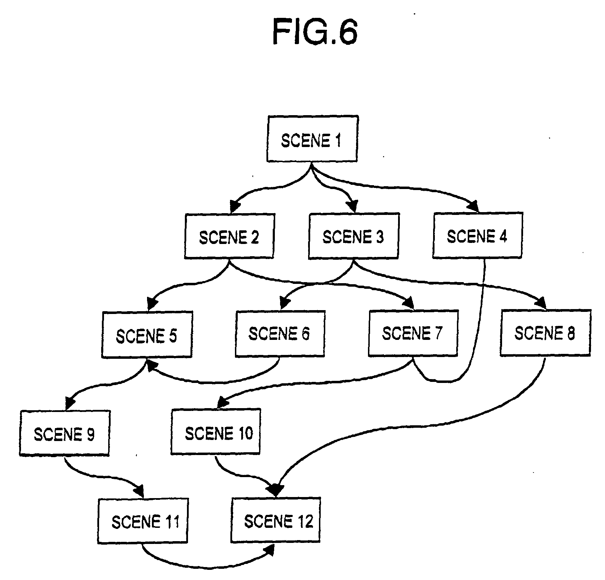

Fig. 6 is a conceptual illustration of scene transitions. Scene 1 in this figure is the first scene in the scenario. The scenes have transition rules, and depending upon the player's action there is a transition to scene 2, scene 3, or scene 4. Thereafter, scenes transition according to predefined transition rules, such as "if in scene 2 and a particular item is obtained, move to scene 5, but if not obtained, move to scene 7."

In this embodiment of the invention the game starts with no picture characters that the player character can use. In other words, the player character cannot talk. Then, by communicating with the game character, which can already use picture characters, the picture characters that the player character can use gradually increase. That is, by repeating messages spoken (displayed) by the game character or by guessing the message content according to the surrounding conditions, the player character recognizes the content of picture characters used by the game character and thereby becomes able to use the same picture characters.

This can be achieved by, for example, providing a usability flag for each picture character managed by the game execution unit 50, and recording information that a picture character is usable when specific conditions are satisfied as a result of player actions or game character behavior.

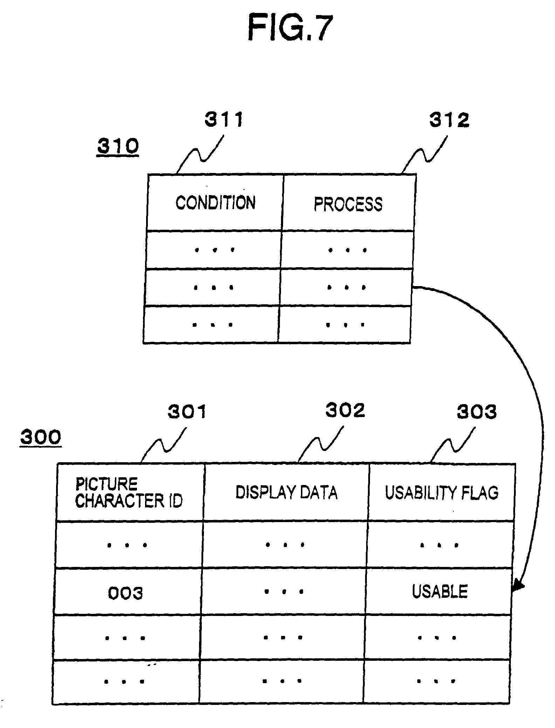

Fig. 7 is a conceptual illustration describing the process at this time. Reference numeral 310 in this figure is a table linking processes 312 and conditions 311 contained in the scenario file. Reference numeral 300 is a picture character list linking picture character IDs 301, which are identification codes for picture characters that can be used in the game, and usability flags 303, which declare if the picture character can be used by the player character.

Condition 311 states that, for example, "the player performs a particular action in scene 5" or "the player converses with ○ ○," Process 312 records the process content of control unit 51 when the condition is satisfied.

For example, if process 312 for a certain condition describes a process for enabling use of picture character of picture character ID 003, control unit 51 changes the usability flag 303 of the corresponding picture character in the picture character list 300 so that that picture character can be used.

The player can thus increase the picture characters that can be used as the game progresses, and can create more varied, complex messages. This is like experiencing in a game the process whereby an infant gradually learns language, and can further enhance the player's interest in this game.

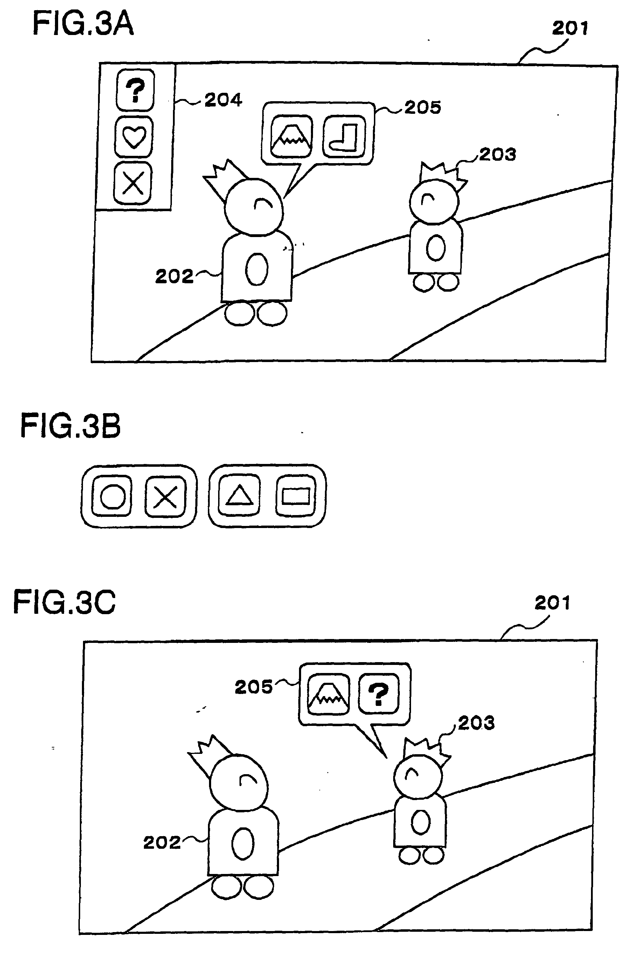

The game execution unit 50 selectably presents the picture characters usable by the player in a particular scene on display unit 80. This can be accomplished by referencing the usability flags 303 in picture character list 300, extracting the usable picture character IDs 301, referencing the display data 302 corresponding to the IDs, and then generating and displaying the picture characters. Fig. 3 is a conceptual illustration describing the screen at this time. In screen 201 in Fig. 3A, player character 202 and game character 203 are displayed as appearing characters. The picture characters usable by the player are presented in a list in the picture character area 204 provided in one part of the screen. This display can be a scrolling list or a hierarchical list, for example.

The player uses a controller or other input unit 70 to select a picture character from the picture character area 204. When the game execution unit 50 detects a selection by the player, it adds a balloon 205 to screen 201 and presents the picture characters in the order received. A process for displaying the selected picture character can be achieved using a technique from the prior art, and further description thereof is omitted.

In this embodiment the picture characters input by the player are segmented into units of two characters each. This is a convenient division for the game execution unit 50 to interpret the messages inputted by the player, and for the player to interpret messages from the game character.

Therefore, if the player inputs in order the picture characters "○" "X" "Δ" "□", the characters are displayed in the balloon as shown in Fig. 3B grouped "OX" and "Δ□". If "○" "X" "Δ" are input in this order, they are displayed grouped "OX" and "Δ".

A balloon 205 is also displayed when the game character 203 speaks, and the picture character message is displayed in the balloon. In this case, as shown in Fig. 3C the pointer is in the direction of the game character 203, and the balloon can thus be recognized as a message from the game character 203. Messages from the game character 203 are also displayed grouped every two characters in the same way as the player character messages.

A process whereby game execution unit 50 interprets the meaning of a picture character message inputted by the player and advances game play is described below.

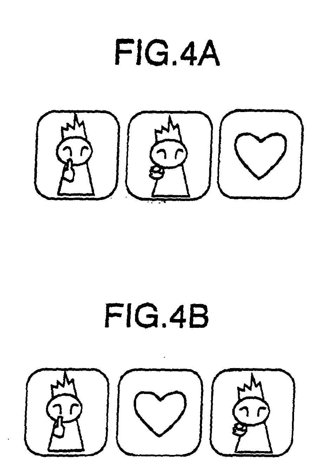

Picture character messages are basically interpreted according to the combination of picture characters used irrespective of the picture character inputted order. Therefore, the message "me" "you" "heart" shown in Fig. 4A and the message "me" "heart" "you" shown in Fig. 4B are the same.

When a message is received from a player, control unit 51 searches dictionary 60 for data containing the response process for the received message using as the search keys the combination of picture character IDs for the picture characters in the message, the game character with which the player character is talking, and the scene in which the conversation is taking place. Subsequent progress of the game is then changed according to the response process stored in the found data. It should be noted that the response process can contain subprocesses so that the response varies according to whether the player character has already completed a certain action.

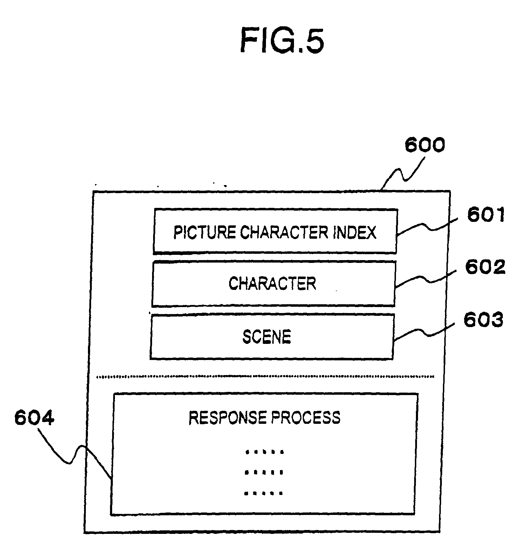

The structure of dictionary 60 is described with reference to Fig. 5. Dictionary 60 uses a database to manage the response process data 604 defining the reaction of the game character, for example, as determined by player messages, for example, received by control unit 51. Dictionary 60 is precompiled for messages that the player is expected to input as the scenario progresses.

In this figure response data 600 includes picture character index 601 of picture character combinations forming the preconceived messages, game character information 602, scene information 603, and response process data 604.

The game character information 602 is the item that records to which game characters the response process data 604 applies. This item enables the response process to change in the same scene according to the game character with which the player character is talking. The scene information 603 is the item that records to which scenes the response process data 604 applies. The response process data 604 is the item that records the response process for a received message.

The control unit 51 extracts specific response data 600 using as search keys the picture character index 601, game character information 602, and scene information 603, and runs the process, such as answering with a specific message, stopping the conversation, doing nothing, or doing a specific action, recorded in the response process data 604 of the response data 600.

Variations can be added to the process content of the response process data 604 by using conditional branching as described above. It is possible, for example, to record data such that process A is performed if the player obtains a certain item, and otherwise process B is performed. The control unit 51 makes conditional branch decisions by referencing the scenario data file 61 recording the scenario advancement conditions, and then runs the corresponding process. It is thus possible to change the reaction of the game character according to what the player has done up to that time even though the player inputs the same message to the same game character in the same scene.

If the response of the game character is to output a picture character message, the player character can also be enabled to use those picture characters. The player character can thus increase its vocabulary through conversation, and thus also increase game playability. This is possible by writing into response process data 604 a process for manipulating the usability flags 303 in picture character list 300 in conjunction with the process causing the game character to output a specific message.

It should be noted that the dictionary configuration shall not be limited to that described in the present embodiment, and any desirable configuration can be used. For example, dictionaries could be managed separately according to the game characters and scenes. In this case the search time can be shortened.

When a player message is received, the interface unit 52 extracts the corresponding response data 600 from dictionary 60 using as search keys the picture characters used in the message, the game character that is being conversed with, and the scene in which the conversation takes place.

The response process data 604 recorded in the response data 600 is then passed to control unit 51. The control unit 51 then advances the game by causing the game character to talk or perform other response according to the response process data 604.

Because the meaning of a message is interpreted based on the combination of picture characters as described above, the interface unit 52 only needs to search for data matching the picture character combination and not a match with the message. It is therefore also possible by means of the present invention to reduce the number of prepared dictionaries. This also has the effect of enabling the game to be enjoyed in language regions where word order and other grammatical rules differ. It is also not necessary to manage parts of speech, which has the effect of lightening the burden of the interpretation process.

Yet further, the interface unit 52 can also organize picture characters of the same meaning before searching the dictionary 60. For example, the search can be conducted after converting a down-pointing arrow "↓" and a picture of a shaking head, which have the same negative nuance as the "X" picture character, to the "X" picture character. The amount of data stored to dictionary 60 can be further reduced by running this same process before storing the index 601 in dictionary 60, and the search speed can be further increased.

It should also be noted that because the picture character order is not considered when interpreting the meaning of a message, there are cases in which the interpretation will be unclear. Consider an example in which the picture characters "○", "leg", "X", and "spear" are received. In this case the "leg" picture character is the picture of a leg, and means "to go" or "to come." In addition, the "spear" picture character is the picture of a spear, and means "fight."

Depending upon the position of "○" and "X" in this case, the message may be of uncertain meaning, or could have multiple meanings. To prevent this in this embodiment the displayed picture characters are grouped into units of two characters each. As a result of this process it is clear that "○" and "leg" are one set and "X" and "spear" are one set, and the message is known to mean "did not come to fight." The same meaning can, of course, be conveyed by reversing the order of the "leg" and "○".

The player could also input the picture characters meaning "fire" and "water" to express the meaning of "hot water," for example, and the range of expression can thus be further expanded.

The player can also interpret the words of the game character more easily by similarly grouping messages from the game character in two-character units.

For example, a combination of a "picture character indicating oneself" and a "picture character indicating another person" could be interpreted to mean "we"; a combination of an "apple" picture character and a "cup" picture character could be interpreted to mean "apple juice"; and a combination of a "bread" picture character and a "meat" picture character could be interpreted to mean a "sandwich."

It should be noted that the present invention shall not be limited by the embodiment described above, and can be varied in many ways within the intended scope.

For example, the present invention can be applied to a network system built by adding a communication function to the entertainment system 10 and connecting plural entertainment systems 10 over a network.

In this case the picture characters or picture character combinations can be sent from one entertainment system 10 to another entertainment system 10 and displayed. The message interpretation method described above can also be used in this case to enable a mutual exchange of thought. In other words, the present invention can also be used as a communication tool in a networked system. It will also be obvious in this case that the invention can be used as a communication tool for communication not only between characters, but also between the individual players operating the networked entertainment systems 10.

In another alternative embodiment the type of picture characters usable by the player can be increased according to how long the player has played the game. Yet further, they can be increased when the player clears a particular problem, such as defeating the enemy, or clears an event or mini-game within the game.

Conversely, the picture characters usable by the player could be reduced if the player is defeated by the enemy or fails to clear an event or mini-game within the game.

In this way, increase or decrease of usable picture characters can enhance enjoyableness in playing the game.

As described above, a player can create his own messages to converse with another character in a game played on an entertainment system according to the present invention.

In addition, the player can enjoy the process of gradually learning a language by limiting the types of picture characters that the player can use.

Yet further, a wide range of people can enjoy the game regardless of age or the language used.

## Claims

1. An entertainment system comprising an input means for receiving operating data from a player, an output means for outputting image data for presenting information necessary to a game, storage means, and control means,
the entertainment system advancing the game by the control means running a process based on a game program and game data stored in the storage means, wherein:
the game data includes a symbol data group consisting of symbols expressing meaning by appearance, and management data indicative of which symbols can be selected by the player;
the control means outputs from the output means symbols indicated by the management data as being selectable so that the symbols can be selected by the player, and
outputs one or a plurality of symbols detected by the input means as being selected from the output means.

2. An entertainment system as described in claim 1, wherein:
the game data further includes a dictionary data group linking one symbol or a combination of plural symbols, game progress condition, and response processes; and
the control means receiving a symbol selection extracts from the dictionary data group a response process corresponding to the received one or plural symbols and game progress conditions, and then runs the response process.

3. An entertainment system as described in claim 1 or 2, wherein:
the game program is a program for playing a game in which the scenario progresses according to communication between a player character manipulated by the player and a character other than the player character, each generated in virtual space; and
the types of symbols selectable by the player increases and decreases according to game progress.

4. An entertainment-system-readable recording medium for recording a program for playing on the entertainment system a game in which actions of the game player are received and the scenario advances as a result of simulated conversation between the game player and character, and for recording game data necessary to execute the program, wherein:
the game data includes a symbol data group consisting of symbols expressing meaning by appearance; and
the program causes the entertainment system to run
a process for extracting player-selectable symbols from the symbol data group;
a process for displaying the player-selectable symbols so that the symbols can be selected; and
a process for displaying the selected symbols.

5. A recording medium as described in claim 4, wherein:
the game data further includes a dictionary data group linking one symbol or a combination of plural symbols, game progress conditions, and response processes; and
the program extracts from the dictionary data group a response process corresponding to the symbol and game progress conditions information when a symbol selection is received, and causes the entertainment system to run the response process.

6. A recording medium as described in claim 4 or 5, wherein:
the program further causes the entertainment system to run a process for increasing and decreasing according to game progress the type of symbols selectable by the player.

7. A method for communicating with a character generated in virtual space by an entertainment system, comprising:
a step for displaying a symbol expressing meaning by appearance so that the symbol can be selected; and
a step for referencing rules defining a relationship between input information and character actions when input information specifying a combination of symbols is received, and determining and displaying character actions

8. A program for running on an entertainment system a game whereby a plurality of characters acting in a virtual world can communicate to each other, the program causing the entertainment system to run:
a process for creating a message using a combination of symbols expressing meaning by appearance, the meaning being predefined; and
a process for outputting this message as a means for communication.

9. A program as described in claim 8, wherein the entertainment operator is not informed of the meaning of symbols contained in the outputted message.

10. A program as described in claim 8, wherein the plural characters acting in the virtual world include a player character that can be manipulated by the operator of the entertainment system, and
the symbols that can be used to convey a message by the player character are symbols contained in messages outputted by another character.

11. A program as described in claim 8, wherein a combination of specific characters is defined with a meaning that is separate from the combined meaning of the predefined meanings of the individual specific characters.

12. A program as described in claim 8, wherein a combination of same symbol is defined to mean emphasis of the predefined meaning of the individual symbol.

13. An entertainment system for playing a game whereby a plurality of characters acting in a virtual world can communicate with each other, comprising:
a means for creating a message using a combination of symbols expressing meaning by appearance by an entertainment system operator, the meaning of the symbols being predefined; and
a means for outputting this message.

14. An entertainment system as described in claim 13, wherein the entertainment system operator is not informed of the meaning of symbols contained in the outputted message.

15. An entertainment system as described in claim 13, wherein the plural characters acting in the virtual world include a player character that can be manipulated by the operator of the entertainment system, and
the symbols that can be used to convey a message by the player character are symbols contained in messages outputted by another character.

16. An entertainment system as described in claim 13, wherein a combination of specific symbol is defined with a meaning that is separate from the combined meaning of the predefined meanings of the individual specific symbol.

17. An entertainment system as described in claim 13, wherein a combination of same symbol is defined to mean emphasis of the predefined meaning of the individual symbol.

18. A program for exchanging information between a plurality of computer systems connected via a network, the program causing the computer systems to run:
a process for receiving operator input and generating a combination of symbols expressing meaning by appearance; and
a process for transmitting the combination of symbols as the exchanged information.

19. A program as described in claim 18, wherein the symbols that can be used in combination are symbols contained in already-exchanged picture character combinations.

20. A program as described in claim 18, wherein symbol combinations are in units of two symbols each.

21. A program as described in claim 18, wherein a combination of same symbol is defined to mean emphasis of the predefined meaning of the individual symbol.

22. A computer network system for exchanging information between a plurality of computer systems connected via a network, wherein:
a computer constituting the computer network comprises
a means for receiving operator input and generating a combination of symbols expressing meaning by appearance; and
a means for transmitting the combination of symbols as the exchanged information.

23. A computer network system as described in claim 22, wherein the symbols that can be used in combination are symbols contained in already-exchanged symbol combinations.

24. A computer network system as described in claim 22, wherein symbol combinations are in units of two symbols each.

25. A computer network system as described in claim 22, wherein a combination of same symbol is defined to mean emphasis of the predefined meaning of the individual symbol.

26. An entertainment-system-readable recording medium for recording a program for playing on the entertainment system a game in which actions of the game player are received and the scenario advances as a result of simulated conversation between the game player and character, and for recording game data necessary to execute the program, wherein:
the game data is data including a symbol data group consisting of symbols expressing meaning by appearance; and
the program causes the entertainment system to run
a process for displaying symbols contained in the symbol data group so that the symbols can be selected; and
a process for displaying the selected symbols.

27. A recording medium for recording a program as described in any one of claims 8, 9, 10, 11, 12, 18, 19, 20, and 21.
